(19) Europäisches Patentamt
European Patent Office
Office européen des brevets

(11) Veröffentlichungsnummer: **0 000 331**
**B1**

(12) # EUROPÄISCHE PATENTSCHRIFT

(45) Veröffentlichungstag der Patentschrift: **28.12.83**

(51) Int. Cl.³: **C 08 L 77/00**, C 08 J 3/20, D 01 F 6/60

(21) Anmeldenummer: **78100161.5**

(22) Anmeldetag: **15.06.78**

(54) **Verfahren zum Färben linearer Polyamide in der Masse mit Salzen von 1:2 Chromkomplexmonoazofarbstoffen; die damit erzeugten Fasern.**

(30) Priorität: **23.06.77 CH 7722/77**

(43) Veröffentlichungstag der Anmeldung: **24.01.79 Patentblatt 79/2**

(45) Bekanntmachung des Hinweises auf die Patenterteilung: **28.12.83 Patentblatt 83/52**

(84) Benannte Vertragsstaaten: **CH DE FR GB NL**

(56) Entgegenhaltungen:
**CH - A - 524 011**
**DE - B - 1 110 786**
**DE - B - 1 226 727**
**DE - B - 1 260 652**
**FR - A - 2 032 391**
**GB - A - 1 021 737**
**GB - A - 1 264 191**
**US - A - 2 814 614**

(73) Patentinhaber: **CIBA-GEIGY AG**
**Patentabteilung Postfach**
**CH-4002 Basel (CH)**

(72) Erfinder: **Lienhard, Paul, Dr.**
**Im Kirschgarten 14**
**CH-4402 Frenkendorf (CH)**
Erfinder: **Iqbal, Abul, Dr.**
**Im Schaiengarten 1**
**CH-4107 Ettingen (CH)**
Erfinder: **Peter, Heinz, Dr.**
**Tulpenweg 5**
**CH-4310 Rheinfelden (CH)**

(56) Entgegenhaltungen:
**CHEMICAL ABSTRACTS, vol. 83, nr. 24, Dezember 15, 1975, Seite 80 Columbus, Ohio, USA**
**CHEMICAL ABSTRACTS, vol. 83, nr. 8, August 25, 1975, Seite 213, Columbus, Ohio, USA**
**CHEMICAL ABSTRACTS, vol. 83, nr. 10, September 8, 1975, Seiten 117-118, Columbus, Ohio, USA**

**EP 0 000 331 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zum Färben linearer Polyamide in der Masse mit Salzen von 1:2 Chromkomplex-monoazofarbstoffen; die damit erzeugten Fasern

Die Erfindung betrifft das Färben von Polyamiden aus der Schmelze mit Aminsalzen von 1:2-Metallkomplexen von Monoazofarbstoffen.

Es ist bekannt, dass zur Massefärbung synthetischer Polyamide die Alkalisalz der 1:2 Metallkomplexe von Monoazofarbstoffen verwendet werden können (siehe z.B. GB—PS 1 021 737 und 1 264 191 und FR—PS 1 547 128).

Diese haben jedoch den Nachteil, dass sie in der Regel, mit anorganischen Salzen verunreinigt, polymerunlösliche Rückstände ergeben, die zu einer starken Belegung der Sieb- oder Filteranlagen führen und einen grossen Reinigungsaufwand notwendig machen.

Oft halten die als Alkalisalz isolierten Farbkörper hartnäckig Wasser zurück und nehmen beim Lagern nach scharfer Trocknung wieder Wasser auf, das während des Spinnprozesses zu Polymerabbau oder zu Korrosion in der Spinnanlage führen kann.

Diejenigen der erfindungsgemäss zu verwendenden Aminsalze, deren Amine mehr als 12 C-Atome enthalten, sind in der DE—A 743 848 beschrieben. Aufgrund ihrer hohen Löslichkeit in organischen Lösungsmitteln werden sie dort zum Färben von Lacken verwendet.

Ferner wird die Verwendung der Aminsalze der Erfindung in der US—A 2814614 (insbesondere Beispiel 9) zum Färben von Lacken, Polyamiden und Polyestern beschrieben. Insoweit von Spinnfärben die Rede ist, sind Polyamide nicht betroffen. Lediglich das Spinnfärben von Acetylcellulose wird erwännt. Dieses erfolgt aus acetonischer Lösung bei 60°C.

Die FR—A 2032 391 beschreibt die Verwendung der Aminsalze der Erfindung zum Färben von Geweben aus Polyamidfasern, wobei die Gewebe mit einer Lösung der Farbsalze in organischen Lösungsmitteln imprägniert und die imprägnierten Fasern während kurzer Zeit auf Temperaturen bis zu 210°C erhitzt werden.

Die CH—A 524 011 und GB—1 264 191 bilden die einzigen Literaturstellen, in denen ein Färbeverfahren unter Verschmelzung der Polyamidteilchen beschrieben wird. Diese Patentschriften befassen sich hauptsächlich mit Azofarbstoffalkalisalzen, Aminsalze sind nicht explicit beschrieben, nur Rhodamin- und Diäthylammoniumsalze sind erwähnt, wobei die Rhodaminsalze spinngefärbte Polyamidfasern mit ungenügender Lichtechtheit ergeben und die Diäthanolammoniumsalze wegen zu grosser Hyproskopizität für die erfindungsgemässe Anwendung ungeeignet sind.

Die DE—A 1 260 652 und 1 226 727 beschreiben die Verwendung von Azofarbstoffsalzen von Aminen, die ein Aethersauerstoff enthalten, zum Färben von Spinnlösungen, unter anderem synthetischer Polyamide. Die Spinnlösungen werden durch Verdampfen des Lösungsmittels oder durch Einleiten in ein Fällbad zu Fasern verformt. Dies erfolgt bei Temperaturen unter 100°C.

Gegenstand der vorliegenden Erfindung ist nun ein Verfahren zum Färben linearer Polyamide durch Vermischen der Polyamidteilchen mit dem Farbstoff in Abwesenheit von Wasser, Entfernung von allenfalls vorhandenem Lösungsmittel, Erhitzen der farbstoffhaltigen Polyamidteilchen zur Schmelze und Verformen der Schmelze zu Fasern, dadurch gekennzeichnet, dass man als Farbstoffe Salze der Formel (1):

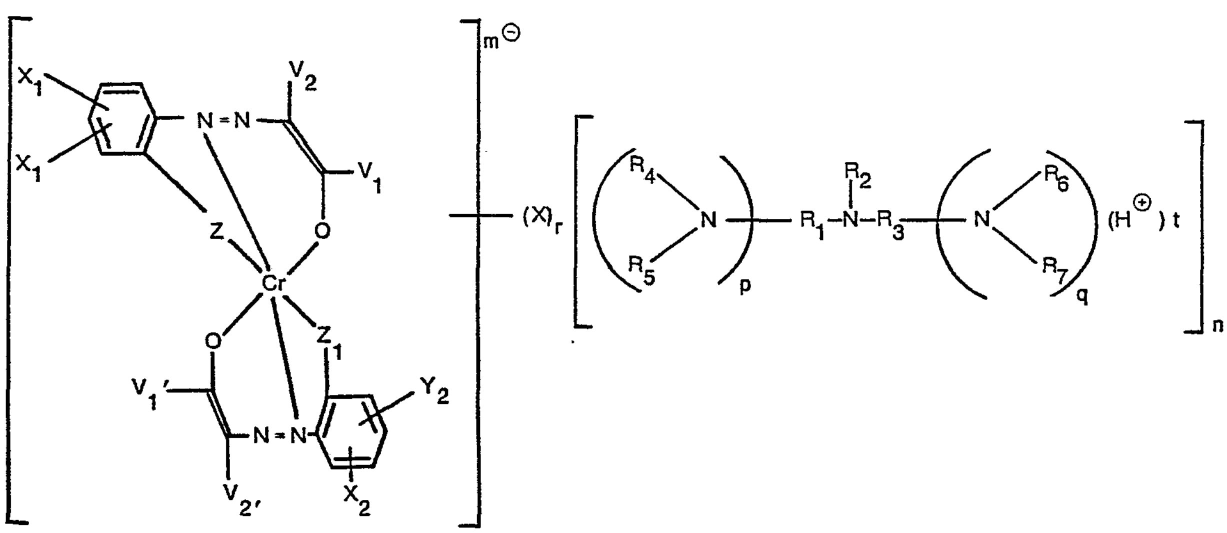

verwendet, worin

$R_1$ eine Alkyl- bzw. Alkylengruppe mit 1—18 C-Atomen, eine Cycloalkyl- oder Cycloalkylengruppe mit 5—6 C-Atomen

$R_3$ ein H-Atom, eine Alkyl-bzw. Alkylengruppe mit 1—18 C-Atomen oder eine Cycloalkylgruppe mit 5—6 C-Atomen

$R_2$, $R_4$, $R_5$, $R_6$ und $R_7$ Wasserstoffatome, Alkylgruppen mit 1 bis 18 Kohlenstoffatomen oder Cycloalkylgruppe mit 5 bis 6 Kohlenstoffatomen

p und q 0 oder 1 bedeuten, wobei q = 0 ist, wenn $R_3$ für ein Wasserstoffatom steht, t = p + q + 1, m und t = 1 bis 3

$r = m\text{-}1$ und $n = \frac{m}{t}$ bedeuten

X eine an die Farbstoffkomponente, aber nicht an Cr gebundene $—COO^{\ominus}$ oder eine $—SO_3^{\ominus}$ Gruppe,

$X_1$ und $X_2$ H-Atome, Alkyl-, Alkoxy- oder Alkylsulfonylgruppen mit 1—6 C-Atomen, Alkanoylaminogruppen mit 2—6 C-Atomen oder Gruppen der Formel

$SO_2NNR'$ bedeuten, worin R ein H-Atom, eine Alkylgruppe mit 1—6 C-Atomen, eine Hydroxyalkylgruppe mit 2—6 C-Atomen, eine alkoxyalkylgruppe mit 3—8 C-Atomen oder einen gegebenenfalls durch Halogenatome, Alkylgruppen mit 1—4 C-Atomen substituierten Phenylrest, R' ein H-Atom, eine Alkylgruppe mit 1—6 C-Atomen oder eine Hydroxyalkylgruppe mit 2—6 C-Atomen,

$Y_1$ und $Y_2$ H- oder Halogenatome oder Alkylgruppen mit 1—6 C-Atomen bedeuten oder worin

$X_1$ und $Y_1$ oder

$X_2$ und $Y_2$ zusammen einen ankondensierten Benzolring bilden,

Z und $Z_1$ bedeuten ein O-Atom oder eine —COO-Gruppe und die Reste

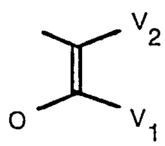

oder

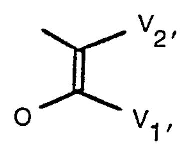

die Gruppen

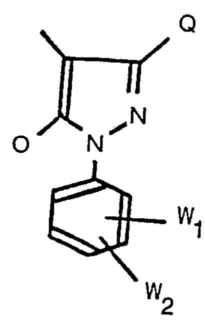

oder

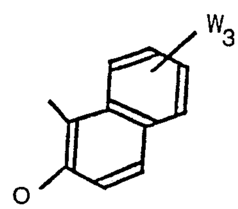

bedeuten, worin

Q eine Methyl- oder Carbamoylgruppe oder eine Alkoxycarbonylgruppe mit 2—6 Atomen,

$W_1$ ein H- oder Halogenatom, eine Methyl- oder Sulfamoylgruppe

$W_2$ ein H- oder Halogenatom und

$W_3$ ein H-Atom oder eine Alkanoylaminogruppe mit 2—6 C-Atomen ist.

Bevorzugt sind Farbstoffe der Formel (1), worin

$X_1 = X_2$, $Y_1 = Y_2$ und $Z = Z_1$ und die Reste

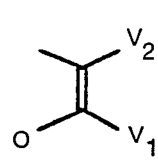

und

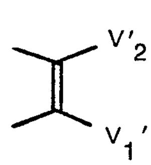

den Rest der Formel

,

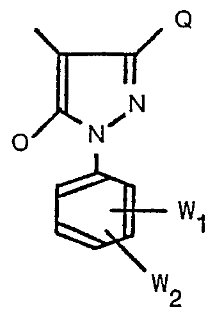

bedeuten, worin

Q, $W_1$ und $W_2$ die angegebene Bedeutung haben.

Man verwendet vorzugsweise Aminsalze von Chromkomplexen, die keine Sulfonsäuregruppen und keine freien Carboxylgruppen enthalten.

Die Metallkomplexe der Formel (1) enthalten als Kation, vorzugsweise ein solches der Formel

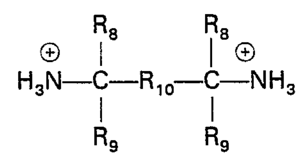

worin

$R_8$ ein H-Atom oder eine Alkylgruppe mit 1 bis 4 Kohlenstoffatomen,

$R_9$ dasselbe wie $R_8$ oder aber eine Cyclopentyl-, Cyclohexyl- oder Phenylgruppe und

$R_{10}$ ein geradkettiger oder verzweigter Alkylenrest mit 1 bis 18 Kohlenstoffatomen bedeuten.

Als Beispiele von Monoaminen seien Methylamin, Trimethylamin, Aethylamin, Diäthylamin, Triäthylamin, Propylamin, Isopropylamin, 2-Isopropoxy-n-propylamin, n-Butylamin, Isobutylamin, Aethyl-n-butylamin, Tri-(n-butyl)-amin, Pentylamine, n-Hexylamin, Tri-(2-äthylhexyl)amin, Cyclohexylamin, N-Methylcyclohexylamin, Dicyclohexylamin, n-Dodecylamin oder Stearylamin genannt.

Bevorzugt sind Diamine wie N,N-Dibutyläthylendiamin und N-äthylpropylendiamin, insbesondere aber symmetrisch gebaute Alkylendiamine mit 2 bis 18 Kohlenstoffatomen, beispielsweise Aethylen-, Propylen-, Tetramethylen-, Pentamethylen-, Hexamethylendiamin, 1,12-Diaminododecan, 2,11-Diaminododecan, 3,12-Diaminotetradecan, 2,11-Diamin-2,11-dimethylhyldodecan, 4,13-Diamin-3,14-dimethyl-hexadecan, 4,13-Diamino-hexadecan, 3,12-Diamino-2,13-dimethyl-tetradecan, 5,14-Diaminooctadecan, 4,13-Diamino-2,15-dimethyl-hexadecan.

Als Beispiel eines Triamins sei Diäthylen-triamin genannt.

Als lineare Polyamide kommen für das vorliegende Verfahren die Polyamide in Betracht, wie sie beispielsweise aus ε-Carpolactam, aus ω-Aminoundecansäure, aus Hexamethylendiamin und Adipinsäure oder aus analogen Ausgangsstoffen herstellbar sind. Ferner kommen auch Mischpolyamide in Betracht, beispielsweise aus ε-Carpolactam und Hexamethylendiamin und Adipinsäure.

Die Farbstoffe werden nach bekannten Verfahren in fester oder flüssiger Form oder als Lösung mit dem Polyamid vermischt und die erhaltene Mischung gegebenenfalls zwischengetrocknet.

Bevorzugt werden die zu färbenden Polyamide in Form von Pulvern, Körnern oder Schnitzeln mit dem trockenen Farbstoffpulver paniert, d.h. mechanisch derart vermischt, dass die Oberfläche dieser Teilchen mit einer Schicht des Farbstoffes überzogen ist. Der Farbstoff liegt vorteilhaft in fein verteilter Form vor.

Anstelle der reinen Farbstoffe kann man in vielen Fällen mit Vorteil Präparate verwenden, die neben dem Farbstoff einen Trägerstoff enthalten, vorzugsweise ein Ca- oder Mg-Salz einer höheren Fettsäure, beispielsweise der Stearin- oder Behensäure.

Die den Farbstoff bzw. das Farbstoffpräparat enthaltenden Polyamidteilchen werden geschmolzen und nach bekannten Verfahren versponnen.

Man kann den Farbstoff bzw. das Farbstoffpräparat auch in fester oder flüssiger Form in das geschmolzene Polyamid einbringen und dieses anschliessend verspinnen.

Man erhält gleichmässig gefärbte Fasern, die sich durch eine hohe Licht-, Nass-, Reib- und Thermofixierechtheit auszeichnen.

Die Farbstoffe sind im gefärbten Material gleichmässig und fein verteilt. Obwohl ihre Löslichkeiten in organischen Solventien wie chlorierten Kohlenwasserstoffen, niederen Ketonen, Estern und Alkoholen nicht hoch sind, liegen sie im Polyamid oft in gelöster Form vor.

Die gefärbten Gegenstände enthalten zweckmässig 0,01 bis 3% Farbstoff.

Es ist überraschend, dass die erfindungsgemäss zu verwendenden Aminsalze als Salz starker Säuren und schwacher Basen die hohen Temperaturen des Schmelzprozesses ohne wesentliche Zersetzung überstehen und die textilen Eigenschaften der Fasern nicht merklich verschlechtern.

Beispiel 1

Zu einer gut gerührten Suspension von 84,38 g (0.1 Mol) des 1:2-Chromkomplex-Natriumsalzes aus dem Azofarbstoff 2-Amino-5-äthylsulfonyl-phenol → 1-Phenyl-3-methyl-5-pyrazolon in 1300 ml Wasser von 90—95°C wird innert 15 Minuten eine Lösung von 5.8 g (0.05 Mol) Hexamethylendiamin in 100 ml Wasser 5.5 g Ameisensäure (0.12 Mol) getropft. Man lässt das Gemisch unter Rühren 1 Stunde bei 90—95°C ausreagieren und filtriert anschliessend unter schwachem Vakuum. Das Nutschgut wird nacheinander mit 600 ml einer 1%-igen Ameisensäurelösung und 600 ml Wasser gewaschen. Das im Vakuum getrocknete (110—115°C) Produkt wiegt 87.8 g. Es weist einen Farbsalzgehalt von 97.1% auf, enthält nur 0.25% NaCl und 1% Wasser.

Durch Ausspinnen gemäss Beispiel 69 in Polycaprolactam erhält man ein rotes Fasermaterial, das sehr gute Licht-, Nass-, Thermofixier- und Reibechtheiten aufweist.

Beispiel 2

Zu einer 70°C warmen Lösung von 16.87 g (0.02 Mol) des 1:2-Chromkomplex-Natriumsalzes aus dem Azofarbstoff 2-Amino-5-äthylsulfonyl-phenol → 1-Phenyl-3-methyl-5-pyrazolon in 250 ml Aethanol wird innert 30 Minuten eine Lösung von 1.16 g (0.01 Mol) Hexamethylendiamin in 50 ml Aethanol und 1.1 g (0.024 Mol) Ameisensäure zugetropft. Das Reakationsgemisch lässt man auf Raumtemperatur abkühlen. Es wird weitere 3 Stunden gerührt und der kristallin ausfallende Niederschlag abfiltriert, mit 50 ml Aethanol gewaschen und anschliessend im Vakkumofen bei 110—115°C getrocknet. Man erhält 16.7 g Farbsalz.

Beispiel 3

16,87 g (0.02 Mol) des 1:2-Chromkomplex-Natriumsalzes aus dem Azofarbstoff 2-Amino-5-äthylsulfonyl-phenol → 1-Phenyl-3-methyl-5-pyrazolon werden in 250 ml n-Butanol angeschlämmt und auf 90—95°C erwärmt, wobei der Farbstoff teilweise in Lösung geht. Anschliessend tropft man innert 30 Minuten eine Lösung von 1.16 g (0.01 Mol) Hexamethylendiamin in 50 ml Wasser und 1.1 g (0.024 Mol) Ameisensäure zu.

Das Reaktionsgemisch lässt man auf Raumtemperatur abkühlen und weitere 3 Stunden bei dieser Temperatur rühren, wobei das Farbsalz kristallin ausfällt. Nach Filtration, Waschen des Nutschgutes mit 50 ml n-Butanol und Trocknung im Vakuumofen bei 110—115°C erhält man 14.4 g Farbsalz.

Beispiel 4

Die Suspension von 13.19 g (0.02 Mol) des 1:2-Chromkomplex-Natriumsalzes aus dem Azofarbstoff 2-Amino-phenol → 1-Phenyl-3-methyl-5-pyrazolon in 250 ml Wasser wird auf 90—95°C erwärmt und 1 Stunde bei dieser Temperatur gut gerührt. Anschliessend tropft man eine Lösung von 1.16 g (0.01 Mol) Hexamethylendiamin in 50 ml Wasser und 0.9 ml (0.024 Mol) Ameisensäure innert 15 Minuten zu und lässt das Reaktionsgemisch unter Rühren 1 Stunde bei 90—95°C ausreagieren. Dann wird filtriert und das Nutschgut nacheinander mit 125 ml einer 1%-igen Ameisensäurelösung und 125 ml Wasser gewaschen. Nach Trocknung im Vakuumofen bei 110—115°C erhält man 12.9 g Farbsalz. Es enthält 0.039% NaCl und 4.3% $H_2O$.

Durch Ausspinnen gemäss Beispiel 69 in Polycaprolactam erhält man ein scharlach-rotes Fasermaterial, das sehr gute Licht, Nass-, Thermofixier- und Reibechtheiten aufweist.

Beispiel 5

Zu einer 90—95°C warmen Lösung von 1.16 g (0.01 Mol) Hexamethylendiamin in 300 ml Wasser und 1.10 g (0.024 Mol) Ameisensäure werden innert 30 Minuten 16.87 g (0.02 Mol) des pulverförmigen 1:2-Chromkomplex-Natriumsalzes aus dem Azofarbstoff 2-Amino-5-äthylsulfonyl-phenol → 1-Phenyl-3-methyl-5-pyrazolon zugestreut. Die resultierende Suspension wird noch 1 Stunde bei 90—95°C gerührt. Anschliessend filtriert man unter schwachem Vakuum, wäscht das Nutschgut mit 150 ml einer 1%-igen Ameisensäurelösung und 150 ml Wasser und trocknet unter Vakuum bei 110—115°C. Die Ausbeute an Farbsalz beträgt 17.2 g. Es enthält 0.071% NaCl und 1.85% Wasser.

Beispiel 6

Zu einer 90—95°C warmen Lösung von 1.16 g (0.01 Mol) Hexamethylendiamin in 50 ml $H_2O$ und 1.1 g (0.024 Mol) Ameisensäure wird innert 30 Minuten eine 90°C warme Suspension von 16.87 g (0.02 Mol) des 1:2-Chromkomplex-Natriumsalzes aus dem Azofarbstoff 2-Amino-5-äthyl-sulfonyl-phenol → 1-Phenyl-3-methyl-5-pyrazolon in 200 ml Wasser getropft. Man spült den Tropftrichter mit ca. 20 ml Wasser aus und lässt das Reaktionsgemisch unter Rühren noch 1 Stunde bei 90—95°C ausreagieren. Der ausfallende Farbstoff wird abfiltriert, nacheinander mit 150 ml einer 1%-igen Ameisensärelösung und 150 ml Wasser gewaschen und schliesslich bei 110—115°C getrocknet. Man erhält 17,2 g Farbsalz. Es enthält nur 0.057% NaCl und 1.4% $H_2O$.

Beispiel 7

Zu einer 90—95°C warmen Lösung von 18.39 g (0.02 Mol) des 1:2-Chromkomplex-Natriumsalzes aus dem Azofarbstoff 3-Hydroxy-4-amino-naphtalinsulfonsäure → 1-Phenyl-3-methyl-5-pyrazolon in 250 ml n-Butanol wird innert 40 Minuten eine Lösung von 3.48 g (0.03 Mol) Hexamethylendiamin in 200 ml Wasser und 3.3 g (0.072 Mol) Ameisensäure getropft. Das Reaktionsgemisch lässt man auf Raumtemperatur abkühlen, wobei die Hauptmenge des Farbsalzes kristallin ausfällt. Das abgeschiedene Produkt wird abfiltriert, mit 300 ml Wasser gewaschen und im Vakuumofen bei 110—115°C getrocknet. Das butanolische Filtrat wird noch zweimal mit je 100 ml Wasser ausgeschüttelt und anschliessend in einem rotierenden Kolben vollständig eingedampft. Man erhält auf diese Weise eine weitere kleinere Menge Produkt, das ebenfalls unter Vakuum bei 110—115°C getrocknet wird. Die Gesamtausbeute an Farbsalz beträgt 20.9 g. Es enthält < 0.1 Kochsalz.

Durch Ausspinnen gemäss Beispiel 69 in Polycaprolactam erhält man ein blauchstichig rotes Fasermaterial, das sehr gute Licht-, Nass-, Thermofixier- und Reibechtheiten aufweist.

Beispiel 8

18.14 g (0.02 Mol) des 1:2-Chrommischkomplex-Natriumsalzes aus den Azofarbstoffen 2-Aminophenol-4-sulfomethylamid → 1-Phenyl-3-methyl-5-pyrazolon und 2-Aminophenol-4-sulfomethylamid → 1-Acetamido-7-naphtol werden in 250 ml Wasser angeschlämmt und 60 Minuten bei 90—95° gerührt, wobei der Farbstoff vollständig in Lösung geht. Jetzt tropft man innert 15 Minuten eine Lösung von 1.16 g (0.01 Mol) Hexamethylendiamin in 50 ml Wasser und 1.1 g (0.024 Mol) Ameisensäure zu und lässt das Reaktionsgemisch unter Rühren 1 Stunde bei 90—95°C ausreagieren. Das kristallin ausfallende Farbsalz wird unter schwachem Vakuum abfiltriert, nacheinander mit 125 ml einer 1%-igen Ameisensäurelösung und 125 ml Wasser gewaschen und anschliessend unter Vakuum bei 110—115°C getrocknet. Man erhält 12,9 g Farbsalz mit einem Kochsalzagehalt von 0.039% und einem Wassergehalt von 4.3%.

Durch Ausspinnen in Polycaprolactam gemäss Beispiel 69 erhält man ein braunes Fasermaterial, das sehr gute Licht-, Nass-, Thermofixier- und Reibechtheiten aufweist.

Beispiel 9

Zu einer 90—95°C warmen Lösung von 14.56 g (0.02 Mol) des 1:2-Chromkomplex-Natriumsalzes aus dem Azofarbstoff 2-Amino-4-chlor-phenol → 1-Phenyl-3-methyl-5-pyrazolon in 250 ml n-Butanol wird innert 20 Minuten eine Lösung von 3,62 g (0.02 Mol) Dicyclohexylamin in 50 ml $H_2O$, 5 ml Aethanol und 1.1 g (0.024 Mol) Ameisensäure getropft. Man lässt das Reaktionsgemisch auf Raumtemperatur abkühlen, wobei etwas Aminsalz feinkristallin ausfällt. Nach Filtration und Waschen des Nutschgutes mit wenig Lösungsmittel wird die Butanollösung dreimal mit je 100 ml $H_2O$ ausgeschüttelt und anschliessend im rotierenden Kolben vollständig eingedampft. Der Rückstand sowie das oben erwähnte Nutschgut werden im Vakuumofen bei 110—115°C getrocknet. Man erhält insgesamt 17.3 g Farbsalz mit einem NaCl-Gehalt von 0.1% und einem $H_2O$-Gehalt von 1—2.3%.

Durch Ausspinnen gemäss Beispiel 71 in Polycaprolactam erhält man ein rotes Fasermaterial, das sehr gute Licht-, Nass-, Thermofixier- und Reibechtheiten aufweist.

Beispiel 10

Zu einer 90—95°C warmen Lösung von 16.87 g (0.02 Mol) des 1:2-Chromkomplex-Natriumsalzes aus dem Azofarbstoff 2-Amino-5-äthylsulfonyl-phenol → 1-Phenyl-3-methyl-5-Pyrazolon in 500 ml n-Butanol wird innert 20 Minuten eine Mischung von 2.0 g (0.01 Mol) 1,12-Diaminododecan in 100 ml Wasser und 1.1 g (0.024 Mol) Ameisensäure getropft. Man lässt das Reaktionsgemisch 1 Stunde bei 90—95°C ausreagieren und anschliessend auf Raumtemperatur abkühlen. Die organische Phase wird abgetrennt, dreimal mit je 125 ml Wasser ausgeschüttelt und schliesslich im rotierenden Kolben vollständig eingedampft (Badetemperatur = max. 90°C). Der im Vakuum bei 110—115°C getrocknete Rückstand wiegt 10.7 g und enthält nur noch 0.044% NaCl und 0.69% $H_2O$.

Beispiel 11

2 g des gemäss Beispiel 4 hergestellten Farbsalzes und ungefähr 10 g Aceton werden mit 98 g Polyhexamethylenadipamid in Schnitzelform gerührt, bis sich ein gleichmässiger Belag aus dem roten Farbsalz auf der Oberfläche der Schnitzel gebildet hat. Die Schnitzel werden getrocknet und dann geschmolzen und in einem herkömmlichen Apparat gesponnen, wobei Fäden mit einem scharlach-roten Farbton erhalten werden, welche eine vorzügliche Echtheit gegenüber Wasser, Reiben, Trockenreinigen und Licht besitzen.

Beispiele 12—68

Setzt man die in Kolonne II der Tabellen 1—6 angegebene Zahl Mol eines der aufgeführten einheitlichen bzw. gemischten 1:2-Cr-Komplex-Na-Salzes mit der in Kolonne III der genannten Tabellen erwähnte Zahl Mol eines Amins nach den in Beispiel 1—10 beschriebenen Verfahren um, so erhält man ebenfalls wertvolle Farbkörper von hoher Reinheit. Durch Aufpudern auf Polyamid (PA 6) und Spinnmassefärbung erhält man Fasern, deren Farbton in Kolonne IV der Tabellen angegeben ist.

TABELLE 1

| I | II | | III | | IV |
|---|---|---|---|---|---|
| Bsp. Nr. | Mol | 1:2-Cr-Komplex-Na-Salz aus | Mol | Amin | Farbton in PA 6 |
| 12 | 1 | 2-Amino-5-äthylsulfonyl-phenol → 1-Phenyl-3-methyl-5-pyrazolon | 1/2 | Propylendiamin | rot |
| 13 | 1 | do. | 1/2 | Aethylendiamin | rot |
| 14 | 1 | do. | 1 | Stearylamin | rot |
| 15 | 1 | do. | 1 | Aethylendiamin | rot |
| 16 | 1 | do. | 1 | Diäthylamin | rot |
| 17 | 1 | do. | 1/2 | N,N-(Dimethyl)-äthylendiamin | rot |
| 18 | 1 | do. | 1/3 | Diäthylentriamin | rot |
| 19 | 1 | 2-Amino-4-chlor-phenol-5-sulfamid → 1-Phenyl-3-methyl-5-pyrazolon | 1/2 | Hexamethylendiamin | rot |
| 20 | 1 | 2-Aminophenol-4-sulfamid → 1-(3′-Chlorphenyl)-3-methyl-5-pyrazolon | 1/2 | Hexamethylendiamin | orange |
| 21 | 1 | do. | 1 | Stearylamin | orange |
| 22 | 1 | 2-Aminophenol-4-sulf-N,N-diäthylamid → 1-Phenyl-3-methyl-5-pyrazolon | 1/2 | Hexamethylendiamin | orange |
| 23 | 1 | 2-Aminophenol-4-sulf-N,N-bis(2′-hydroxyäthyl)-amid → 1-Phenyl-3-methyl-5-pyrazolon | 1/2 | Hexamethylendiamin | orange |
| 24 | 1 | 2-Amino-4-methylsulfonyl-phenol → 1-(3′-Chlorphenyl)-3-methyl-5-pyrazolon | 1/3 | Diäthylentriamin | orange |
| 25 | 1 | do. | 1/2 | Hexamethylendiamin | orange |
| 26 | 1 | 2-Aminophenol-4-sulf-(2′-methoxy-äthyl)-amid → 1-Phenyl-3-methyl-5-pyrazolon | 1 | Triäthylamin | orange |
| 27 | 1 | do | 1/2 | Hexamethylendiamin | orange |
| 28 | 1 | 2-Amino-5-äthylsulfonyl-phenol → 1-Phenyl-3-methyl-5-pyrazolon | 1/2 | 1,12-Diaminododecan | rot |

TABELLE 2

| I | II | | III | | IV |
|---|---|---|---|---|---|
| Bsp. Nr. | Mol | 1:2-Cr-Komplex-Na-Salz aus | Mol | Amin | Farbton in PA 6 |
| 29 | 1 | 1-Amino-2-naphthol-4-sulfonsäure → 1-Phenyl-3-methyl-5-pyrazolon | 3 | Triäthylamin | blaustichig rot |
| 30 | 1 | do. | 3 | Aethylbutylamin | do. |
| 31 | 1 | 2-Amino-4-chlorphenol → 1-(4′-sulfo-phenyl)-3-methyl-5-pyrazolon | 1 1/2 | Hexamethylendiamin | rot |
| 32 | 1 | do. | 3 | Tri-(2-Aethylhexyl)amin | rot |

TABELLE 3

| I | II | | III | | IV |
|---|---|---|---|---|---|
| Bsp. Nr. | Mol | 1:2-Cr-Komplex-Na-Salz aus | Mol | Amin | Farbton in PA 6 |
| 33 | 1 | 2-Aminophenol → 1-Phenyl-3-methyl-5-pyrazolon | 1/2 | Aethylendiamin | scharlachrot |
| 34 | 1 | do. | 1/2 | N,N-Di-(n-butyl)-äthylen-diamin | scharlachrot |
| 35 | 1 | 2-Amino-4-chlor-phenol → 1-(4′-Chlorphenyl)-5-pyrazolon-3-carbonsäure-äthylester | 1/2 | Hexamethylendiamin | rot |
| 36 | 1 | 2-Amino-4-chlorphenol → 1-Phenyl-5-pyrazolon-3-carbonsäure-amid | 1/2 | Hexamethylendiamin | rot |
| 37 | 1 | 2-Amino-4-chlorphenol → 2-Naphtol | 1 | n-Octylamin | violett |
| 38 | 1 | do. | 1 | Diäthylamin | violett |
| 39 | 1 | 2-Amino-4-chlorphenol → 1-Phenyl-3-methyl-5-pyrazolon | 1/2 | Hexamethylendiamin | rot |
| 40 | 1 | do. | 1 | Trimethylamin | rot |
| 41 | 1 | 2-Amino-4,6-dichlor-phenol → 1-Phenyl-3-methyl-5-pyrazolon | 1/2 | N-Aethyl-propylen-diamin | rot |
| 42 | 1 | 2-Amino-4-chlor-phenol → 1-Phenyl-3-methyl-5-pyrazolon | 1 | Trimethylamin | rot |
| 43 | 1 | 2,5-Dimethoxyanilin → 1-Phenyl-3-methyl-5-pyrazolon (entmethylierend chromiert) | 1/2 | Hexamethylendiamin | bordeaux |

TABELLE 4

| I | II | | III | | IV |
|---|---|---|---|---|---|
| Bsp. Nr. | Mol | 1:2-Cr-Komplex-Na-Salz aus | Mol | Amin | Farbton in PA 6 |
| 44 | 1 | Anthranilsäure → 1-Phenyl-3-methyl-5-pyrazolon | 1/2 | Hexamethylendiamin | gelb |
| 45 | 1 | do. | 1 | n-Dodecylamin | gelb |
| 46 | 1 | Anthranilsäure → 1-(2′-Chlorphenyl)-3-methyl-5-pyrazolon | 1/2 | Hexamethylendiamin | gelb |
| 47 | 1 | do. | 1 | n-Octylamin | gelb |
| 48 | 1 | Anthranilsäure → 1-(2′-Aethylphenyl)-3-methyl-5-pyrazolon | 1/2 | Aethylendiamin | gelb |
| 49 | 1 | do. | 1/3 | Methyl-di-(3-amino-propyl)-amin | gelb |
| 50 | 1 | Anthranilsäure → 1-(2′,5′-Dichlorphenyl)-3-methyl-5-pyrazolon | 1/4 | N,N′-Di-(3-amino-propyl)-äthylendiamin | gelb |
| 51 | 1 | do. | 1/2 | Hexamethylendiamin | gelb |
| 52 | 1 | 2-Amino-5-chlor-benzoesäure → 1-Phenyl-3-methyl-5-pyrazolon | 1 | N-Methylcyclohexyl-amin | gelb |
| 53 | 1 | Anthranilsäure → 1-Phenyl-3-methyl-5-pyrazolon-3′-sulfamid | 1/2 | Hexamethylendiamin | gelb |

TABELLE 5

| I | II | | | III | | IV |
|---|---|---|---|---|---|---|
| Bsp. Nr. | Mol | 1:2-Cr-Komplex-Na-Salz aus X | + Y | Mol | Amin | PA 6 |
| 54 | 1 | 2-Amino-phenol-4-sulf-amid → 1-(3′-Chlor-phenyl)-3-methyl-5-pyrazolon | 2-Aminophenol-4-sulf-amid → 2-Naphtol | 1/2 | Hexamethylendiamin | bordeaux |
| 55 | 1 | do. | do. | 1 | Cyclohexylamin | bordeaux |
| 56 | 1 | 2-Aminophenol-4-sulfisopropylamid → 1-Phenyl-3-methyl-5-pyrazolon | 2-Aminophenol-4-sulf-isopropylamid → 1-Naphthol | 1/2 | Hexamethylendiamin | bordeaux |
| 57 | 1 | 2-Aminophenol-4-sulfmethylamid → 1-(4′-Chlorphenyl)-3-methyl-5-pyrazolon | 2-Aminophenol-4-sulfmethylamid → 1-Acetamido-7-naph-thol | 1 | D-(2-Aethylhexyl)-amin | braun |

TABELLE 6

| I | II | | | III | | IV |
|---|---|---|---|---|---|---|
| Bsp. Nr. | Mol | 1:2-Cr-Komplex-Na-Salz aus X + | Y | Mol | Amin | Farbton in PA 6 |
| 58 | 1 | 2-Amino-4-methyl-phenol → 1-Phenyl-3-methyl-5-pyrazolon | 2-Aminophenol-4-sulfonsäure → 1-Phenyl-3-methyl-5-pyrazolon | 1 | Hexamethylendiamin | rot |
| 59 | 1 | 2-Amino-4-chlor-phenol → 1-Phenyl-3-methyl-5-pyrazolon | 2-Amino-4-methyl-phenol → 1-(4′-Sulfophenyl)-3-methyl-5-pyrazolon | 1 | do. | rot |
| 60 | 1 | 2-Amino-4-methyl-phenol → 1-Phenyl-3-methyl-5-pyrazolon | 2-Amino-4-methyl-phenol → (4′-Sulfo-phenyl)-3-methyl-5-pyrazolon | 1 | Aethylendiamin | rot |
| 61 | 1 | 2-Amino-4-chlor-phenol → 1-Phenyl-3-methyl-5-pyrazolon | 1-Amino-2-naphthol-4-sulfonsäure → 1-Phenyl-3-methyl-5-pyrazolon | 2/3 | Diäthylentriamin | rot |

TABELLE 7

| I | II | | III | | IV |
|---|---|---|---|---|---|
| Bsp. Nr. | Mol | 1:2-Cr-Komplex-Na-Salz aus | Mol | Amin | Farbton in PA 6 |
| 62 | 1 | 2-Amino-4-chlorphenol → 2-Naphthol | 1/2 | 1,12-Diaminododecan | violett |
| 63 | 1 | 2-Amino-4-chlorphenol → 2-Naphthol | 1 | Stearylamin | violett |
| 64 | 1 | 2-Amino-4-chlorphenol → 2-Naphthol | 1/2 | 4,13-Diamino-2,15-dimethylhexadecan | violett |
| 65 | 1 | 2-Aminophenol-4-sulfamid → 1-(3′-Aminosulfonylphenyl)-3-methyl-5-pyrazolon | 1/2 | Hexamethylendiamin | orange |
| 66 | 1 | 2-Aminophenol-4-sulfamid → 1-(3′-Chlorphenyl)-3-methyl-5-pyrazolon | 1/2 | 1,12-Diaminododecan | orange |
| 67 | 1 | 2-Aminophenol-4-sulfamid → 1-(3′-Chlorphenyl)-3-methyl-5-pyrazolon | 1/2 | 4,13-Diamino-2,15-dimethylhexadecan | orange |
| 68 | 1 | 2-Aminophenol-4-sulfamid → 1-(3′-Chlorphenyl)-3-methyl-5-pyrazolon | 1 | Stearylamin | orange |

Beispiel 69

99 g Polyamid aus ε-Caprolactam (Polyamid-6) werden in Form von Schnitzeln mit 1 g gemäss Beispiel 1 erhaltenen Farbsalzes trocken paniert. Die panierten Schnitzel werden bei 290—295°C in einem Extruder versponnen. Der so erhaltene Faden weist eine gleichmässige rote Färbung von hohen Licht-, Nass- und Thermofixierechtheiten auf.

Beispiel 70

60 g des gemäss Beispiel 1 erhaltenen Farbstoffs und 60 g Mg-Behenat werden im Kneter während 1/4 Stunde bei 120—130°C bearbeitet. Nach Erreichen einer homogenen Mischung wird das abgekühlte, spröde Produkt gemahlen. Man erhält ein 50% Farbsalz enthaltendes Farbstoffpräparat.

Verfährt man wie oben beschrieben, verwendet aber anstelle von 60 g Mg-Behenat, 60 Mg-Stearat, so erhält man ebenfalls ein wertvolles Farbstoffpräparat.

Beispiel 71

98 g Polyamid aus ε-Caprolactam (Polyamid-6) werden in Form von Schnitzeln mit 2 g des gemäss Beispiel 65 erhalten Farbstoffpräparates trocken paniert. Die panierten Schnitzel werden bei 290°—295°C in einem Extruder versponnen. Der so erhaltene Faden weist eine gleichmässige rote Färbung von hohen Licht-, Nass- und Thermofixierechtheiten auf.

**Patentansprüche**

1. Verfahren zum Färben linearer Polyamide mit Farbstoffsalzen von 1:2 Chromkomplexen von Monoazofarbstoffen durch Vermischen der Polyamidteilchen mit dem Farbstoff in Abwesenheit von Wasser, Entfernung von allfällig vorhandenem Lösungsmittel, Erhitzen der farbstoffhaltigen Polyamidteilchen zum Schmelzen und Verformen der Schmelze zu Fasern, dadurch gekennzeichnet, dass man Salze der Formel

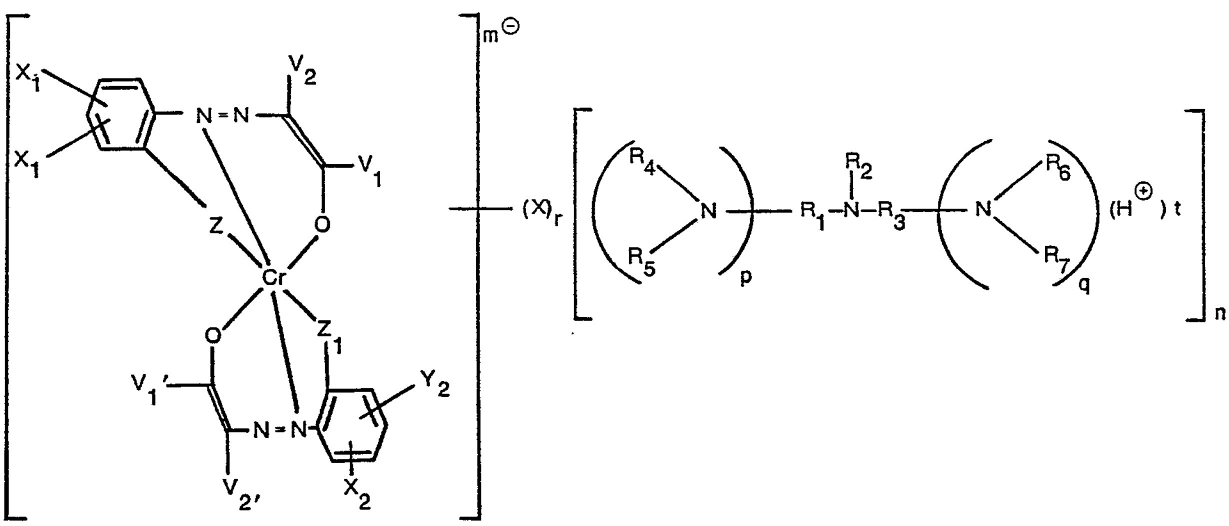

verwendet, worin

$R_1$ eine Alkyl- bzw. Alkylengruppe mit 1—18 C-Atomen, eine Cycloalkyl- oder Cycloalkylengruppe mit 5—6 C-Atomen,

$R_3$ ein H-Atom, eine Alkyl-bzw. Alkylengruppe mit 1—18 C-Atomen oder eine Cycloalkylgruppe mit 5—6 C-Atomen,

$R_2$, $R_4$, $R_5$, $R_6$ und $R_7$ Wasserstoffatome, Alkylgruppen mit 1 bis 18 Kohlenstoffatomen oder Cycloalkylgruppen mit 5 bis 6 Kohlenstoffatomen,

p und q 0 oder 1 bedeuten, wobei q = 0 ist, wenn $R_3$ für ein Wasserstoffatom steht, t = p + q + 1,

m und t = 1 bis 3,

r = m-1 und $= \frac{m}{t}$ bedeuten,

X eine an die Farbstoffkomponente, aber nicht an Cr gebundene —$COO^{\ominus}$ oder eine —$SO_3^{\ominus}$ Gruppe,

$X_1$ und $X_2$ H-Atome, Alkyl-, Alkoxy- oder Alkylsulfonylgruppen mit 1—6 C-Atomen, Alkanoylaminogruppen mit 2—6 C-Atomen oder Gruppen der Formel

$SO_2NNR'$ bedeuten, worin R ein H-Atom, eine Alkylgruppe mit 1—6 C-Atomen, eine Hydroxyalkylgruppe mit 2—6 C-Atomen, eine Alkoxyalkylgruppe mit 3—8 C-Atomen oder einen gegebenenfalls

durch Halogenatome, Alkylgruppen mit 1—4 C-Atomen substituierten Phenylrest, R' ein H-Atom, eine Alkylgruppe mit 1—6 C-Atomen oder eine Hydroxyalkylgruppe mit 2—6 C-Atomen,

$Y_1$ und $Y_2$ H- oder Halogenatome oder Alkylatome mit 1—6 C-Atomen bedeuten oder worin $X_1$ und $Y_1$ oder $X_2$ und $Y_2$ zusammen einen ankondensierten Benzolring bilden,

Z und $Z_1$ ein O-Atom oder eine —COO-Gruppe bedeuten, und worin die Reste

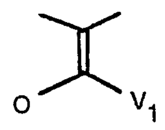

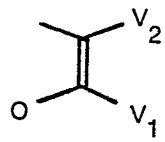

die Gruppen

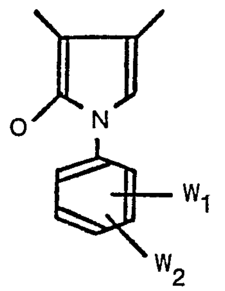

oder

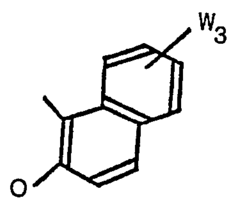

bedeuten, wobei

Q eine Methyl- oder Carbamoylgruppe oder eine Alkoxycarbonylgruppe mit 2—6 Atomen,

$W_1$ ein H- oder Halogenatom, eine Methyl- oder Sulfamoylgruppe,

$W_2$ ein H- oder Halogenatom und

$W_3$ ein H-Atom, eine Alkanoylaminogruppe mit 2—6 C-Atomen sind.

2. Verfahren gemäss Anspruch 1, dadurch gekennzeichnet, dass man symetrische Chromkomplexe verwendet, worin

$X_1 = X_2$, $Y_1 = Y_2$ und $Z = Z_1$, und die Reste

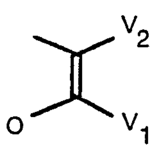

und

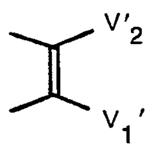

den Rest der Formel

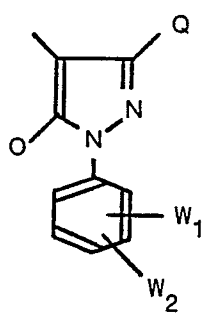

bedeuten, worin

Q, $W_1$ und $W_2$ die angegebene Bedeutung haben.

3. Verfahren gemäss Ansprüchen 1—2, dadurch gekennzeichnet, dass man Aminsalze von Ch-Chromkomplexen verwendet, die keine Sulfonsäuregruppen und keine freien Carboxylgruppen enthalten.

4. Verfahren gemäss Anspruch 1, dadurch gekennzeichnet, dass man Salze verwendet, enthaltend ein Kation der Formel

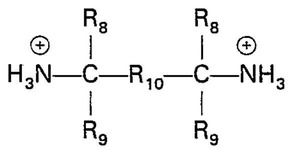

worin

$R_8$ ein Wasserstoffatom oder eine Alkylgruppe mit 1 bis 4 Kohlenstoffatomen,

$R_9$ dasselbe wie $R_8$ oder aber eine Cyclopentyl-, Cyclohexyl- oder Phenylgruppe und

$R_{10}$ ein geradkettiger oder verzweigter Alkylenrest mit 1 bis 18 Kohlenstoffatomen bedeuten.

5. Verfahren gemäss Anspruch 4, dadurch gekennzeichnet, dass man Salze aus Alkylendiaminen mit 2 bis 12 Kohlenstoffatomen verwendet.

6. Lineare Polyamide enthaltend in der Masse einen Farbstoff gemäss Anspruch 1.

## Claims

1. A process for dyeing linear polyamides with dye salts of 1:2 chromium complexes of monoazo dyes by mixing the polyamide particles with the dye in the absence of water, removing any solvent present, heating the polyamide particles containing dye to melting and forming the melt into fibres, characterised in that there are used salts of the formula

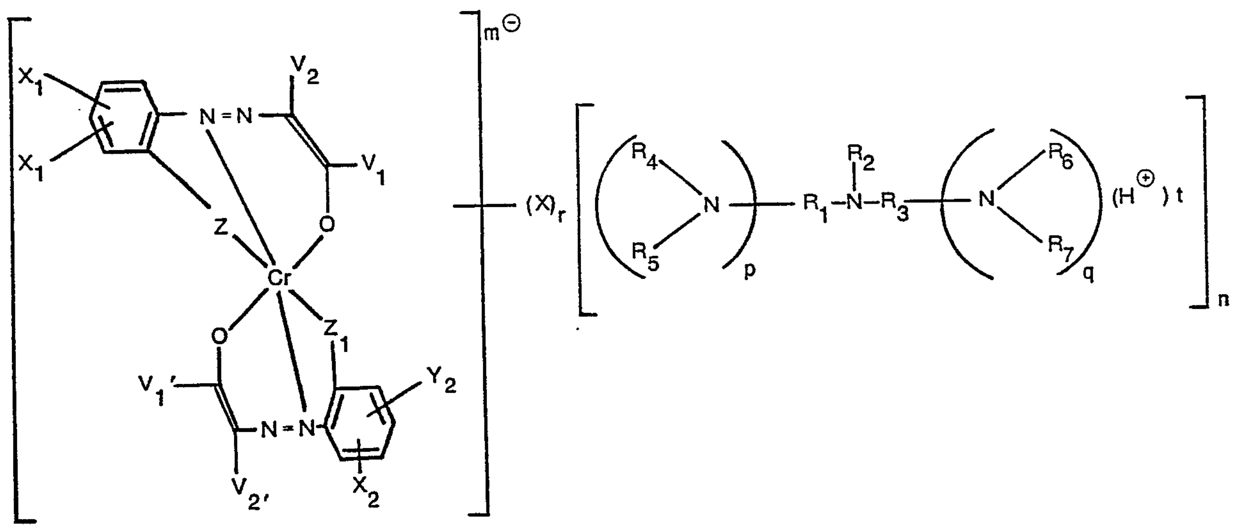

wherein

$R_1$ is an alkyl or alkylene group having 1—18 C atoms, or a cycloalkyl or cycloalkylene group having 5—6 C atoms,

$R_3$ is an H atom, an alkyl or alkylene group having 1—18 C atoms or a cycloalkyl group having 5—6 C atoms,

$R_2$, $R_4$, $R_5$, $R_6$ and $R_7$ are hydrogen atoms, alkyl groups having 1 to 18 C atoms or cycloalkyl groups having 5 or 6 C atoms.

p and q are 0 or 1, q being 0 when $R_3$ is a hydrogen atom,

$t = p + q + 1$,

m und t = 1 to 3,

$r = m-1$ and $= \frac{m}{t}$,

X is a $—COO^\ominus$ or $—SO_3^\ominus$ group bound to the dye component but not to Cr,

$X_1$ and $X_2$ are H atoms, alkyl, alkoxy or alkylsulfonyl groups having 1—6 C atoms, alkanoylamino groups having 2—6 C atoms, or groups of the formula $SO_2NNR'$, wherein R is an H atom, an alkyl group having 1—6 C atoms, a hydroxyalkyl group having 2—6 C atoms, an alkoxyalkyl group having 3—8 C atoms, or a phenyl group which is unsubstituted or substituted by halogen atoms or alkyl groups having 1—4 C atoms, R' is an H atom, an alkyl group having 1—6 C atoms, or a hydroxyalkyl group having 2—6 C atoms,

$Y_1$ and $Y_2$ are H or halogen atoms or alkyl groups having 1—6 C atoms, or wherein

$X_1$ and $Y_1$ or

$X_2$ and $Y_2$ together form a fused-on benzene ring,

Z and $Z_1$ are an O atom or a —COO group, and wherein the radicals

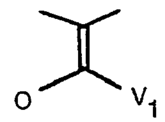

or

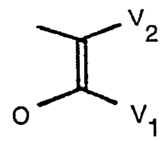

are the groups

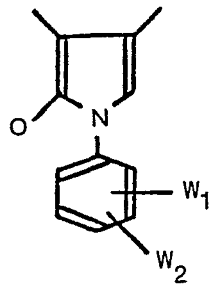

or

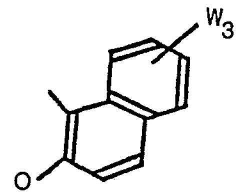

wherein

Q is a methyl or carbamoyl group or an alkoxycarbonyl group having 2—6 C atoms,

$W_1$ is an H or halogen atom, a methyl or sulfamoyl group,

$W_2$ is an H or halogen atom, and

$W_3$ is an H atom, or an alkanoylamino group having 2—6 C atoms.

2. A process according to Claim 1, characterised in that there are used symmetrical chromium complexes wherein

$X_1 = X_2$, $Y_1 = Y_2$ and $Z = Z_1$, and the radicals

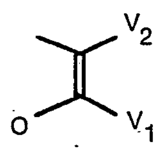

and

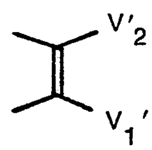

are the radical of the formula

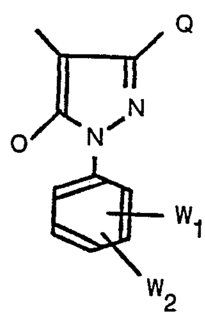

wherein

Q, $W_1$ and $W_2$ have the given meanings.

3. A process according to Claims 1—2, characterised in that there are used amine salts of chromium complexes, which contain no sulfonic acid groups and no free carboxyl groups.

4. A process according to Claim 1, characterised in that there are used salts containing a cation of the formula

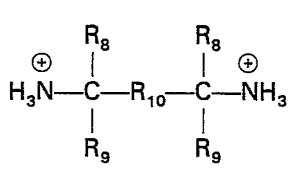

wherein

$R_8$ is a hydrogen atom or an alkyl group having 1 to 4 C atoms,

$R_9$ is the same as $R_8$, or is a cyclopentyl, cyclohexyl or phenyl group, and

$R_{10}$ is a straight-chain or branched-chain alkylene group having 1 to 18 C atoms.

5. A process according to Claim 4, characterised in that there are used salts from alkylenediamines having 2 to 12 C atoms.

6. Linear polyamides containing in the melt a dye according to Claim 1.

**Revendications**

1. Procédé de teinture de polyamides linéaires avec des sels de colorants monoazoïques chromifères 1:2, par mélange des particules de polyamides avec le colorant, sans eau, élimination du solvant éventuellement présent, chauffage des particules portant le colorant pour les fondre et transformation de la masse fondue en fibres, procédé caractérisé en ce qu'on utilise comme colorants des sels de formule ci-dessous:

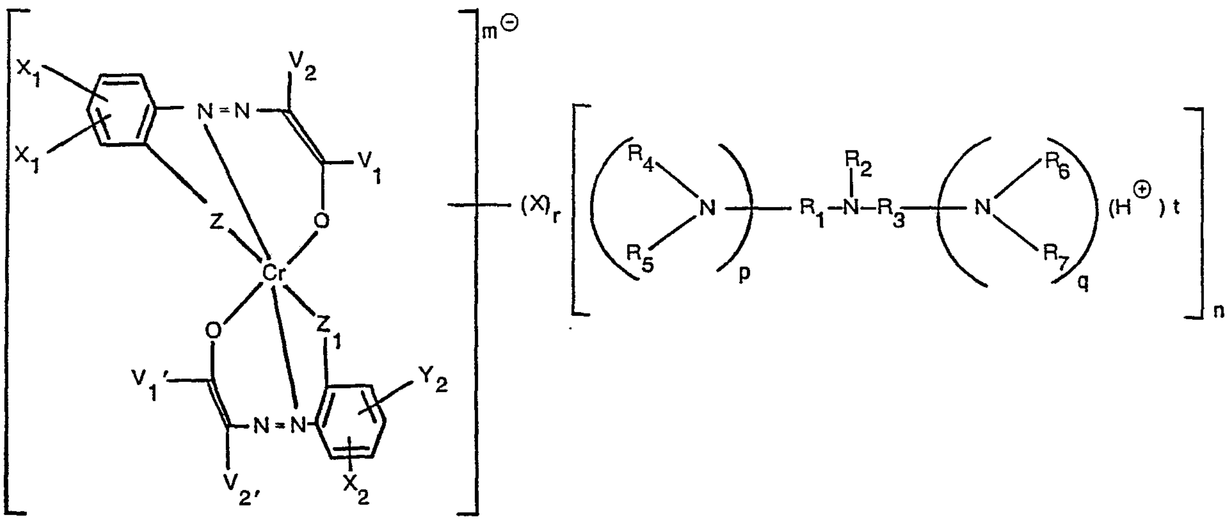

dans laquelle:

$R_1$ désigne un alkyle ou un alkylène en $C_1$ à $C_{18}$ ou bien un cycloalkyle ou un cycloalkylène en $C_5$ ou $C_6$,

$R_3$ un atome d'hydrogène, un alkyle ou un alkylène en $C_1$ à $C_{18}$ ou un cycloalkyle en $C_5$ ou $C_6$,

$R_2$, $R_4$, $R_5$, $R_6$ et $R_7$ représentent des atomes d'hydrogène, des alkyles en $C_1$ à $C_{18}$ ou des cycloalkyles en $C_5$ ou $C_6$,

p et q sont chacun le nombre zéro ou un, q étant nul si $R_3$ est un atome d'hydrogène, et $t = p + q + 1$,

m et t sont chacun un nombre de un à trois,

$r = m-1$ et $n = \frac{m}{t}$,

X représente un groupe $—COO^{\ominus}$ ou $—SO_3^{\ominus}$ lié à la composante colorant mais non au chrome,

$X_1$ et $X_2$ désignent des atomes d'hydrogène, des groupes alkyles, alcoxy ou alkylsulfonyles en $C_1$ à $C_6$, des groupes alcanoylamino en $C_2$ à $C_6$ ou des groupes $SO_2NRR'$,

R étant un atome d'hydrogène, un alkyle en $C_1$ à $C_6$, un hydroxyalkyle en $C_2$ à $C_6$, un alcoxyalkyle en $C_3$ à $C_8$ ou un phényle éventuellement subsituée par des atomes d'halogènes ou par des alkyles en $C_1$ à $C_4$, et R' étant un atome d'hydrogène, un alkyle en $C_1$ à $C_6$ ou un hydroxyalkyle en $C_2$ à $C_6$,

$Y_1$ et $Y_2$ désignant l'hydrogène ou des atomes d'halogènes ou des alkyles en $C_1$ à $C_6$, ou bien $X_1$ et $Y_1$ ou

$X_2$ et $Y_2$ forment ensemble un cycle benzénique condensé,

Z et $Z_1$ sont des atomes d'oxygène ou des groupes —COO—, et les radicaux

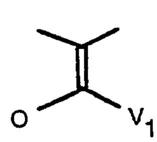 et 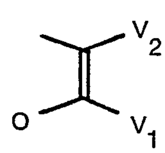

représentent des groupes

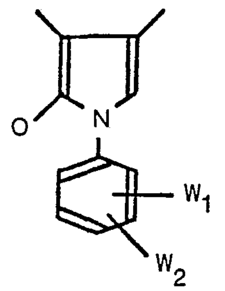

ou

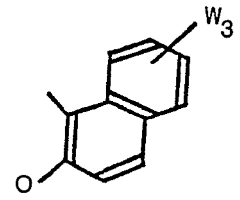

dans lesquels

Q est un groupe méthyle ou carbamoyle ou un alcoxycarbonyle en $C_2$ à $C_6$,

$W_1$ un atome d'hydrogène ou d'halogène ou un groupe méthyle ou sulfamoyle,

$W_2$ un atome d'hydrogène ou d'halogène, et

$W_3$ un atome d'hydrogène ou un groupe alcanoylamino en $C_2$ à $C_6$.

2. Procédé selon la revendication 1 caractérisé en ce que l'on utilise des complexes de chrome symétriques dans lesquels:

$X_1 = X_2$, $Y_1 = Y_2$ et $Z = Z_1$, et les radicaux

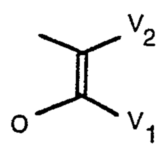

et

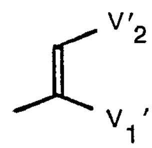

sont chacun un radical

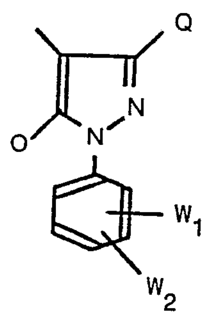

les symboles Q, $W_1$ et $W_2$ ayant les significations données à la revendication 1.

3. Procédé selon la revendication 1 ou 2, caractérisé en ce que l'on utilise des sels d'amines de complexes de chrome sans groupe sulfonique ni groupe carboxylique libre.

4. Procédé selon la revendication 1 caractérisé en ce que l'on utilise des sels comportant un cation de formule:

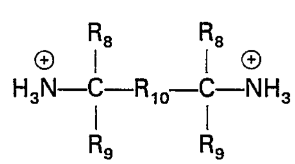

dans laquelle

$R_8$ désigne un atome d'hydrogène ou un alkyle en $C_1$ à $C_4$,

$R_9$ est identique à $R_8$ mais peut être aussi un groupe cyclopentyle, cyclohexyle ou phényle, et

$R_{10}$ est un alkylène à chaîne droite ou ramifiée en $C_1$ à $C_{18}$.

5. Procédé selon la revendication 4 caractérisé en ce que l'on utilise des sels d'alkylène-diamines en $C_2$ à $C_{12}$.

6. Les polyamides linéaires contenant dans la mass un colorant selon l'un quelconque des revendications précédentes.